# EUROPEAN PATENT APPLICATION

(11) **EP 4 852 372 A1**
(43) Date of publication of application: **09.12.2026**
(21) Application number: 26177825.2
(22) Date of filing: 11.05.2026
(51) Int. Cl.: H04L 9/32, G02B 6/00, G09C 1/00, H04L 9/08

(54) **PHYSICAL UNCLONABLE FUNCTION SYSTEM**

(30) Priority: 03.06.2025 US 202519227198
(71) Applicant: Honeywell International Inc., Charlotte, NC 28202 (US)
(72) Inventor: CRUZADO, Edwin D., Charlotte, 28202 (US)
(74) Representative: Haseltine Lake Kempner LLP

(57) **Abstract**

One or more examples includes A physical unclonable function (PUF) system comprising: a laser source configured to output a laser beam in response to an input value; a lens configured to diffuse the laser beam into a diffused laser beam; and a focal plane array (FPA) configured to receive the diffused laser beam, the focal plane array comprising an array of wells, each well of the array of wells being configured to receive charge from the diffused laser beam, wherein the PUF system defines one or more unique variations in at least one of: the laser beam; the lens; or the FPA, and wherein the PUF system is configured to generate a unique output value in response to the input value.

## Description

### TECHNICAL FIELD

The disclosure relates to physical unclonable function (PUF) systems.

### BACKGROUND

Physical unclonable function (PUF) systems may generate, for a received input, a physically-defined unique output. The unique output may be based on the unique physical parameters of the PUF system. PUF system may be used to authenticate messages, generate unique identifiers, or ensure secure communications between computing systems.

### SUMMARY

In general, the disclosure describes devices, systems, techniques for a physical unclonable function (PUF) system. The PUF system described herein may be a laser-based PUF system. The laser-based PUF system may include a laser source outputting a laser beam, a lens configured to diffuse the laser beam, and a focal plane array (FPA) configured to receive the diffused laser beam. The FPA may include an array of photosensitive pixels or charge wells, each of which converts incident photons from the diffused laser beam into electrical charge through the photoelectric effect. The amount of charge accumulated in each pixel corresponds to the intensity of the light incident on that pixel. The PUF system determines parameters of the laser beam based on an input value. The PUF system may apply one or more algorithms (e.g., an error correction algorithm) to an array of values representing the collected charge from the pixels of the FPA to determine an output value corresponding to the input value.

The PUF system may include unique variations in one or more of a laser beam outputted by a laser source of the PUF system, in a lens of the PUF system configured to diffuse the laser beam, and/or in a focal plane array (FPA) of the PUF system configured to receive the diffused laser beam. The unique variation(s) in the PUF system may allow the PUF system to generate a unique, non-duplicable output value for an input value received by the PUF system.

The PUF system may be used for one or more different applications. The applications may include, but are not limited to, establishing a secure communications channel between computing systems, encrypting and/or decrypting transmitted information, generating keys for secured communications protocols, for multi-factor authentication (MFA), for user verification, or to generate a unique identifier for an individual, computing device, and/or computing system.

In some examples, this disclosure is directed to a physical unclonable function (PUF) system comprising: a laser source configured to output a laser beam in response to an input value; a lens configured to diffuse the laser beam into a diffused laser beam; and a focal plane array (FPA) configured to receive the diffused laser beam, the focal plane array comprising an array of wells, each well of the array of wells being configured to receive charge from the diffused laser beam, wherein the PUF system defines one or more unique variations in at least one of: the laser beam; the lens; or the FPA, and wherein the PUF system is configured to generate a unique output value in response to the input value.

In some examples, this disclosure is directed to a method comprising: outputting, by a laser source of a physical unclonable function (PUF) system, a laser beam based on an input value; diffusing the laser beam via a lens of the PUF system into a diffused laser beam; receiving, by an array of wells of a focal plane array (FPA) of the PUF system, the diffused laser beam; and generating, based on charge received by the array of wells of the FPA, a unique output value corresponding to the input value, wherein the PUF system defines one or more unique variations in at least one of: the laser beam; the lens; or the FPA.

In some examples, this disclosure is directed to a computing device comprising a physical unclonable function (PUF) system comprising: a laser source configured to output a laser beam in response to an input value; a lens configured to diffuse the laser beam into a diffused laser beam; and a focal plane array (FPA) configured to receive the diffused laser beam, the focal plane array comprising an array of wells, each well of the array of wells being configured to receive charge from the diffused laser beam, wherein the PUF system defines one or more unique variations in at least one of: the laser beam; the lens; or the FPA, and wherein the PUF system is configured to generate a unique output value in response to the input value.

The details of one or more examples of the disclosure are set forth in the accompanying drawings and the description below. Other features, objects, and advantages of the disclosure will be apparent from the description and drawings, and from the claims.

### BRIEF DESCRIPTION OF DRAWINGS

FIG. 1 is a block diagram illustrating an example PUF System.
FIG. 2 is a conceptual diagram illustrating an example laser system of the PUF system of FIG. 1.
FIG. 3 is a block diagram illustrating an example feedback circuitry of the PUF system of FIG. 1.
FIG. 4 is a flow chart illustrating an example process of determining an output signal by the PUF system of FIGS. 1-3 based on an input signal.
FIG. 5 is a flow chart illustrating an example process of adjusting an intensity of a laser beam of the PUF system of FIGS. 1-3.

### DETAILED DESCRIPTION

The disclosure describes physical unclonable function (PUF) systems. PUF systems may receive an input value and generate a physically-defined output value based on the input value. The PUF system may include, but is not limited to, a laser-based PUF system. The laser-based PUF system may output a laser beam to a focal plane array (FPA) based on the input value. The Laser-based PUF system may then determine the output value based on charge(s) received by well(s) within the FPA. The PUF system may include unique variations (e.g., in a lens diffusing the laser beam in the laser-based PUF system, in the wells of the FPA), which may cause the output value to be unique to the input value and to the PUF system. For example, different PUF systems with different unique variations may output different and unique output values in response to a same input value.

The PUF system may facilitate one or more communications applications including, but are not limited to, establishing a secure communications channel between computing systems, encrypting and/or decrypting transmitted information, generating keys for secured communications protocols, for multi-factor authentication (MFA), for user verification, or to generate a unique identifier for an individual, computing device, and/or computing system. In such examples, the unique variations in the PUF system allows for the generation of unique output values to facilitate the one or more communications applications. For example, the PUF system may be used to encrypt the input value as the output value or to decrypt the input value into the output value. In another example, the PUF system may output a unique identifier for an individual, computing device and/or computing system or a unique key for a secured communications protocol.

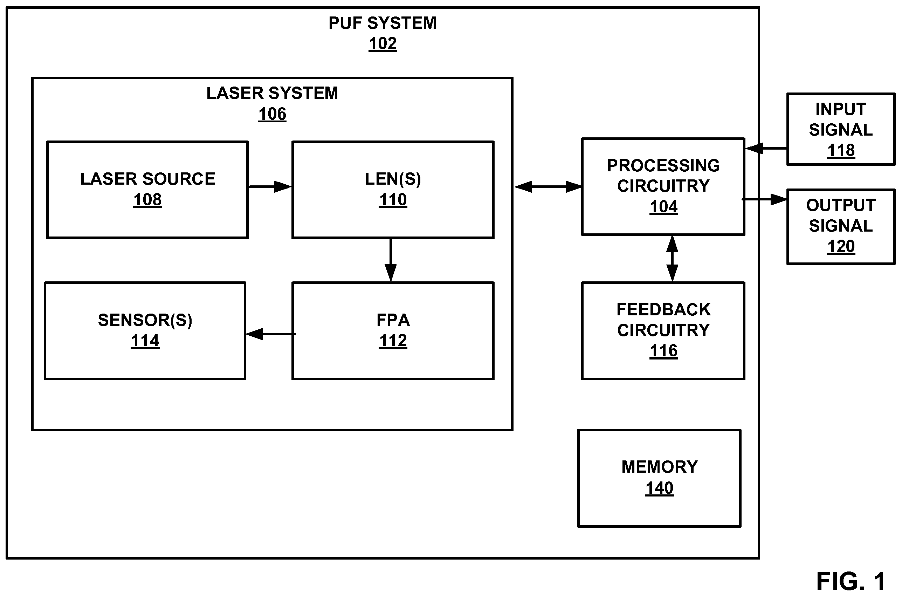

FIG. 1 is a block diagram illustrating an example PUF System 102 (alternatively referred to herein as "system 102"). System 102 may include processing circuitry 104, laser system 106, feedback circuitry 116, and memory 140. PUF system 102 may receive an input signal 118 (e.g., one or more input values, one or more sequences of input values) and generate an output signal 120 (e.g., one or more output values, one or more sequences of output values) based on input signal 118 via laser system 106. PUF system 102 may incorporated into one or more computing devices or computing systems. In some examples, PUF system 102 is incorporated within a portable computing device.

Laser system 106 may include a laser source 108, len(s) 110, a focal plane array (FPA) 112, and sensor(s) 114. Processing circuitry 104 may cause laser source 108 to output a laser beam directed towards FPA 112. Laser source 108 may include one or more laser diode modules configured to output a laser beam. The one or more laser diode modules may include minor variations (e.g., in wavelength, power stability, beam profile, or the like). The minor variations in the laser diode modules may impart unique variations in the laser beam outputted by laser source 108.

Processing circuitry 104 may determine and/or adjust parameters of the laser beam (e.g., a frequency of output of the laser beam by laser source 108, a duration of output of the laser beam by laser source 108) based on input signal 118. For example, processing circuitry 104 may cause laser source 108 to output laser beams with different parameters based on different input signals 118 received by system 102.

Len(s) 110 may be disposed between laser source 108 and FPA 112, e.g., in the path of the laser beam outputted by laser source 108. Len(s) 110 may diffuse the laser beam to a diffused laser beam. Len(s) 110 may include, but are not limited to, holographic diffuser(s), ground glass diffuser(s), or the like. Len(s) 110 may be manufactured to generate a unique laser beam diffusion pattern for system 102 (e.g., compared to otherwise identical PUF systems). For example, len(s) 110 may be ground to form a unique pattern, e.g., to generate the unique laser beam diffusion pattern.

The diffused laser beam may be received by FPA 112. FPA 112 may define an array of photosensitive cells (or pixels), each cell being configured to collect charge in response to the energy received from the diffused laser beam. FPA 112 may include, but is not limited to, one or more complementary metal-oxide semiconductor (CMOS) sensors. The charge collection characteristics of the individual cells may be inherently non-uniform due to manufacturing variations, such that each cell accumulates charge differently even under uniform illumination. This non-uniformity in charge response may be intrinsic and unique to FPA 112 of system 102 (e.g., compared to otherwise identical PUF systems). The spatial distribution of these unique charge collection characteristics across the array forms a physical fingerprint that is specific to FPA 112.

The array of wells of FPA 112 may collect electrical charge in response to incident energy from the diffused laser beam. Based at least in part on the non-uniformity of the charge collection characteristics of the wells and/or on the spatial variation in the diffusion pattern of the laser beam, each well may accumulate a different amount of charge (e.g., a unique amount of charge). This variation results from both the physical randomness of the diffused laser pattern and inherent manufacturing variations among the wells in the array.

Sensor(s) 114 may measure the amount of charge accumulated in each well of the array of FPA 112. Sensor(s) 114 may include, but are not limited to, integrated circuits (ICs) configured to read out the electrical signals corresponding to the collected charge. Each of sensor(s) 114 may be associated with a corresponding well or group of wells in the array. Sensor(s) 114 may transmit the measured charge values to processing circuitry 104 for further analysis.

Processing circuitry 104 may determine output signal 120 based on the values received from sensor(s) 114. Processing circuitry 104 may determine or receive, based on values from sensor(s) 114, an array of charge measurement values. The array of energy values may correspond to the array of wells of FPA 112. Processing circuitry 104 may apply one or more algorithms (e.g., one or more error-correction algorithms) to determine output signal 120 based on the array of energy values.

Due to the unique variations in system 102 (e.g., in the laser beam outputted by laser source 108, in len(s) 110, and/or in the array of wells of FPA 112), system 102 may output a unique output signal 120 based on input signal 118. The one or more algorithms may reduce a unique array of charge measurement values (e.g., from the array of wells of FPA 112) to output signal 120. The one or more algorithms may include, but is not limited to, a Bose-Chaudhuri-Hocquenghem (BCH) algorithm.

Output signal 120 may be unique to system 102 for a particular input signal 118. A same output signal 120 for the particular input signal 118 may not be reproduceable, e.g., due to the unique variations in system 102. System 102 may generate unique output signal 120 to received input signal 118 for applications including, but are not limited to, establishing a secure communications channel between computing systems (e.g., in communication with system 102), encrypting and/or decrypting transmitted information, generating keys for secured communications protocols, for multi-factor authentication (MFA), for user verification, or to generate a unique identifier for an individual, computing device, and/or computing system. Output signal 120 may be unique and non-duplicable.

In some examples, PUF system 102 is used for unique device identification and/or fingerprinting. A computing device incorporating PUF system 102 may generate a unique output signal 120 as a fingerprint for the computing device, which may be used for authentication of the computing device, tracking of the computing device, licensing of the computing device, or the like.

In some examples, PUF system 102 is used to generate a cryptographic key. PUF system 102 may receive input signal 118 as a seed for the key and may generate output signal 120 as a unique value for input signal 118. Output signal 120 may be used as a cryptographic key for a specific communication session. For a specific PUF system 102, a same input signal 118 may generate a same output signal 120, e.g., thereby ensuring consistency in the cryptographic key.

In some examples, PUF system 102 is used for MFA. A computing system may send input signal 118 to a computing device containing PUF system 102 when a user attempts to login to the computing system. PUF system 102 may generate output signal 120 based on input signal 118 and the computing device may transmit output signal 120 to the computing system. The computing system may compare output signal 120 against an expected output for the particular PUF system 102 to confirm the identity of the user.

In some examples, PUF system 102 is used to encrypt and/or decrypt information received by a computing device. Data may be inputted into or combined with an output from a particular PUF system 102 to generate an encryption key for the data. The data may be inputted into the same PUF system 102 to generate output signal 120 for decryption. In such examples, use of the same PUF system 102 may be required for successfully decryption of the encrypted data.

Components of system 102 may degrade over time, which may alter an intensity of the laser beam outputted by laser source 108. Feedback circuitry 116 may monitor components of laser system 106, e.g., to detect unintended changes in the intensity of the laser beam. Processing circuitry 104 may, based on the changes detected feedback circuitry 116, adjust parameters of the laser beam, e.g., to cause laser source 108 to output the laser beam at a target intensity for input signal 118. In some examples, processing circuitry 104 adjusts one or more algorithms to compensate for degradation of components of laser system 106 (e.g., saturation of FPA 112 over time). The adjustments made by processing circuitry 104 in response to signals from feedback circuitry 116 may be performed within a closed-loop network. In some examples, control circuitry of feedback circuitry 116 may adjust the parameters of the laser beam to control the intensity of the laser beam. Feedback circuitry 116 may include, but is not limited to, automatic gain control (AGC) circuitry. In such examples, the AGC circuitry may maintain an intensity of the laser beam generated by laser system 106 over an operational lifetime of system 102.

Memory 140 may store information sensed or received by PUF system 10. Memory 140 may include any type of non-transitory computer-readable storage media, such as random-access memory (RAM), read-only memory (ROM), programmable read-only memory (PROM), erasable programmable read-only memory (EPROM), one-time programmable (OTP) memory, electronically erasable programmable read-only memory (EEPROM), flash memory, or another type of volatile or non-volatile memory device.

In some examples, memory 140 stores a target intensity or a target intensity range for the laser beam outputted by laser source 106. In some examples, memory 140 stores instructions for processing circuitry 104 to apply one or more algorithms (e.g., one or more error correction algorithms) to array of values received from FPA 112 to generate output signal 120.

Memory 140 may store one or more training data sets for PUF system 102. The one or more training data sets may be unique to and correspond to PUF system 102. The one or more training data sets may be obtained during calibration of PUF system 102. In some examples, processing circuitry 104 may be configured to operate in a specific operational mode (e.g., a "calibration" mode) and may generate and store the training data in memory 140. Processing circuitry 104 may retrieve the one or more training data sets from memory 140 and input the training data contained in the one or more training data sets into the one or more algorithms (e.g., to adjust the one or more algorithms to PUF system 102). Processing circuitry 104 may input the training data into the one or more algorithms prior to normal operation of PUF system 102 (e.g., prior to PUF system 102 receiving input signal 118). Adjustment of the one or more algorithms to PUF system 102 using the training data may reduce an error rate of PUF system 102 and improve reproducibility of output signal 120 by PUF system 102.

PUF system 102 as described herein may provide technological advantages of other PUF systems, encryption systems, or authentication systems. PUF system 102 may use inherent physical variations in components of PUF system 102 (e.g., in len(s) 110, in FPA 112) to generate unique output signals 120 for input signals 118, which may inhibit replication of output signal 120 for a given input signal 118. PUF system 102 may use features of physical components to generate unique output signal 120, which may provide for increased protection against software-based intrusions. PUF system 102 may also generate output signal 120 with lower power consumption compared to other systems (e.g., by eliminating a need to encrypt or otherwise alter input signal 118 using electronic components and/or via algorithms).

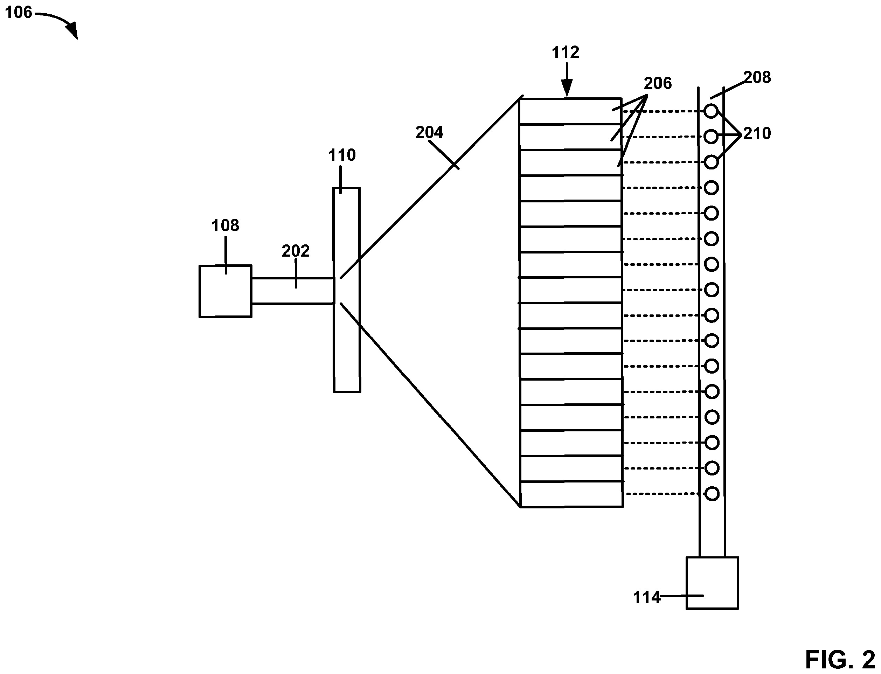

FIG. 2 is a conceptual diagram illustrating an example laser system 106 of PUF system 102 of FIG. 1. Laser system 106 may include, but is not limited to, laser source 108, len(s) 110, FPA 112, and sensor(s) 114.

Laser source 108 may output laser beam 202 to len(s) 110. Laser beam 202 may be defined by one or more parameters including but are not limited to, an intensity of laser beam 202, a duration of laser beam 202, a frequency of laser beam 202, or the like. The one or more parameters of laser beam 202 may be determined by processing circuitry 104 (pictured in FIG. 1) and based at least in part on input signal 118. Laser source 108 may output laser beam 202 towards len(s) 110.

Len(s) 110 may receive laser beam 202 and diffuse laser beam 202 to diffused laser beam 204. Len(s) 110 may be uniquely formed (e.g., uniquely ground) to form a unique diffused laser beam 204. For example, different lens 110 may each form a unique diffused laser beam 204 from a same laser beam 202 (e.g., with the same parameter values).

Len(s) 110 may output diffused laser beam 204 towards FPA 112. FPA 112 may define an array of wells 206. Each well 206 may be a detector (e.g., a photodetector, a thermal detector) and absorb energy from diffused laser beam 204. Each well 206 may generate an electrical charge, e.g., in proportion to an amount of energy absorbed from diffused laser beam 204.

Wells 206 may be non-uniform (e.g., may have different widths, may have different depths) and may absorb different amounts of energy, e.g., in response to receive a same laser beam. Diffused laser beam 204 may also have a unique diffused pattern (e.g., due to len(s) 110) and transmit a different amount of energy to each of wells 206. In combination, due to the unique variations in laser beam 202, in the diffusion pattern of diffused laser beam 204, and/or in the non-uniformity of wells 206, Each of wells 206 may absorb a unique amount of energy and generate a unique amount of charge.

Sensor(s) 114 may monitor the charge value within each of wells 206. The charge value may be represented as a visual icon 210. An intensity of each visual icon 210 may correspond to the charge value within a corresponding well 206. Sensor(s) 114 may detect an array 208 of sensed charge values (e.g., of visual icons 210). Array 208 may be unique to system 102 and input value 118. Sensor(s) 114 may transmit array 208 to processing circuitry 104.

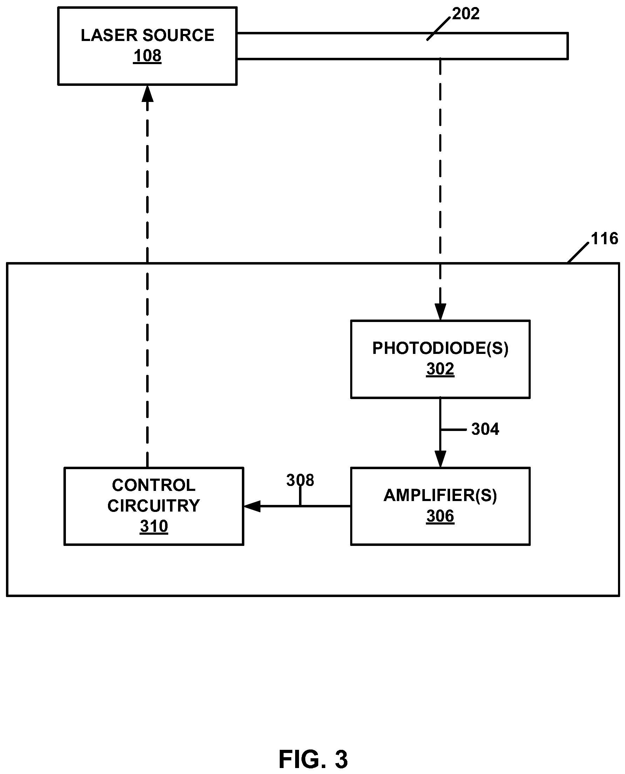

FIG. 3 is a block diagram illustrating an example feedback circuitry 116 of PUF system 102 of FIG. 1. While feedback circuitry 116 as illustrated in FIG. 3 is primarily described with reference to AGC circuitry, feedback circuitry 116 may include other types of control circuitry. Feedback circuitry 116 may include photodiode(s) 302, amplifier(s) 306, and control circuitry 310.

The intensity of laser beam 202 may need to be maintained at a consistent value or within a consistent range to allow PUF system 102 to generate an intended output signal 120 in response to input signal 118. Feedback circuitry 116 may maintain the intensity of laser beam 202 within a target range (e.g., within a percentage of a target intensity, within a target range of intensity values) to maintain the performance of PUF system 102 along the operational lifespan of PUF system 102.

The target intensity of laser beam 202 for PUF system 102 may be a function of one or more factors including, but are not limited to, a Class of laser beam 202 (e.g., Class 2 laser, Class 3R laser), a degree of focus of diffused laser beam 204, a maximum permissible intensity level for laser beam 202, a type of photosensitive material used to form FPA 112, power output of laser source 108 or the like.

Over time, components of PUF system 102 may degrade. For example, efficiency of laser diodes of power source 108 may decrease over time, requiring increased power to generate laser beam 202 with a same intensity. Degradation may be an effect of one or more factors such as, but is not limited to, formation of defects in laser source 108, increased absorption of laser beam 202 within laser source 108, increased scattering of laser beam 202 within laser source 108, or damage to output facet of laser source 108. Degradation of PUF system 102 over time may reduce reliability of PUF system 102, predictability of PUF system 102, and consistency of output signal 120.

Photodiode(s) 302 may monitor laser beam 202 outputted by laser source 108. Photodiode(s) 302 may generate signal 304 (e.g., an electrical signal) indicative of the intensity of laser beam 202. Amplifier(s) 306 may receive and amplify signal 304 from photodiode(s) 302. Control circuitry 310 of feedback circuitry 116 may receive amplified signal 308 from amplifier(s) 306 and determined an intensity of laser beam 202 based on amplified signal 308.

Control circuitry 310 may compare the determined intensity of laser beam 202 (e.g., based on amplified signal 308) to a target intensity of laser beam 202. As components of PUF system 102 degrade over time along the operational lifespan of PUF system 102, the intensity of laser beam 202 may change over time. The target intensity may correspond to a starting intensity of laser beam 202 (e.g., at a start of the operational lifespan of PUF system 102). Control circuitry 310 may determine a difference between the determined intensity and the target intensity. Control circuitry 310 may adjust a current to and/or transmit instructions to laser source 108 to adjust an intensity of laser beam 202. In some examples, control circuitry 310 adjusts the intensity of laser beam 202 to match the target intensity.

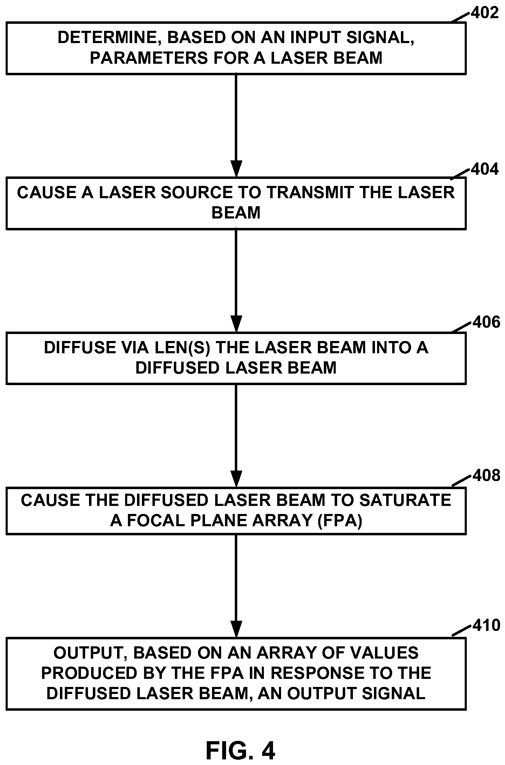

FIG. 4 is a flow chart illustrating an example process of determining output signal 120 by PUF system 102 of FIGS. 1-3 based on input signal 118. While FIG. 4 is primarily described with reference to system 102 of FIGS. 1-3, the techniques may be performed by any PUF system described herein.

System 102 may determine, based on input signal 118, parameters for laser beam 202 (402). Input signal 118 may include, but are not limited to, an input value, a sequence of input values, or the like. Processing circuitry 104 of system 102 may determine one or more parameters of laser beam 202 based at least in part on input signal 118. The one or more parameters of laser beam 202 may include, but are not limited to, an intensity of laser beam 202, a frequency of laser beam 202, a duration of laser beam 202, or the like.

System 102 may cause laser source 108 to transmit laser beam 202 (404). Processing circuitry 104 may transmit instructions to and/or adjust the current to laser source 108 of laser system 106 to cause laser source 108 to output laser beam 202. Processing circuitry 104 may cause laser source 108 to generate and output laser beam 202 in accordance with the determined one or more parameters of laser beam 202. Laser source 108 may output laser beam 202 towards len(s) 110 and FPA 112 of laser system 106 of system 102.

System 102 may diffuse, via len(s) 110, laser beam 202 into diffused laser beam 204 (406). Len(s) 110 may be manufactured (e.g., ground) to form a unique diffusion pattern unique to len(s) 110. As laser beam 202 enters len(s) 110, len(s) 110 diffuses laser beam 202 into diffused laser beam 204 along the unique diffusion pattern. The diffusion pattern of len(s) 110 may be unique to system 102 (e.g., compared to len(s) of an otherwise identical PUF system).

System 102 may cause diffused laser beam 204 to saturate a focal plane array (FPA) 112 (408). FPA 112 may be disposed on an opposite side of len(s) 110. FPA 112 may include an array (e.g., a two-dimensional array) of wells 206. Each of wells 206 may be or may include a detector (e.g., a photodetector, a thermal detector). Each of wells 206 may absorb charge from diffused laser beam 204 (e.g., from a portion of diffused laser beam 204) contacting a surface of well 206. Wells 206 of FPA 112 may be non-uniform (e.g., may define different dimensions, define different depths). The non-uniformity of wells 206 may cause different wells 206 to absorb a different amount of charge from the laser (e.g., before saturation). The non-uniformity of FPA 112 may be unique and may be different from the non-uniformity of otherwise identical FPAs.

Len(s) 110 may output diffused laser beam 204 towards FPA 112. As diffused laser beam 204 contacts FPA 112, wells 206 of FPA 112 may absorb energy from diffused laser beam 204 and generate charge within wells 206. An amount of charge generated within each well 206 may be dependent on one or more of: parameter(s) of laser beam 202, diffusion pattern of diffused laser beam 204, non-uniformity of the respective well 206, or the like. The amount of charge generated within wells 206 may be dependent on the unique variations in system 102 (e.g., in laser beam 202, len(s) 110, and/or FPA 112) and input signal 118. The amount of charge generated within wells 206 may be represented as an array 208 of values. Array 208 may correspond to the array of wells 206. Array 208 may be unique to the combination of system 102 and input signal 118. For example, PUF systems with unique variations (e.g., as described herein) and are otherwise identical may generate unique arrays 208 in response to a same input signal 118.

Sensor(s) 114 of laser system 106 may monitor FPA 112 (e.g., monitor wells 206 of FPA 112). Sensor(s) 114 may detect array 208 of values and may transmit array 208 to processing circuitry 104 of system 102. Array 208 may include an array of visual icons 210, e.g., corresponding to charge values within the array of wells 206. An intensity of each visual icon 210 may corresponding to a generated charge value within a corresponding well 206. For example, a higher intensity of visual icon 210 may correspond to a higher charge value within well 206, or vice versa.

System 102 may output, based on array 208 of values produced by FPA 112 in response to diffused laser beam 204, output signal 120 (410). Sensor(s) 114 may detect array 208 from the array of wells 206 of FPA 112. Sensor(s) 114 may transmit the detected array 208 to processing circuitry 104. Processing circuitry 104 may apply one or more algorithms (e.g., one or more error correction algorithms such as a BCH algorithm) to array 208 to determine output signal 120 corresponding to array 208. The one or more algorithms may reduce array 208 to a smaller number of values of output signal 120.

The one or more algorithms may be trained using a training data set produced by PUF system 102 during calibration of PUF system 102. The training data set may be unique and correspond to the specific PUF system 102 being calibrated. Processing circuitry 104 may access and utilize the training data set to train the one or more error correction algorithms and/or determine a baseline response for PUF system 102 (e.g., prior to normal operation of PUF system 102 along steps 402-410). Use of the training data set within the one or more algorithms may improve the reproducibility and/or consistency of output signal 120 for a given input signal 118. The improved reproducibility and/or consistency of output signal 120 may reduce an error rate of PUF system 102.

The one or more algorithms may not remove the effects of non-uniformity and/or unique variations within laser system 106. The one or more algorithms may be calibrated for system 102, e.g., to preserve the effects of the non-uniformity and/or unique variations within laser system 106. The non-uniformity and/or unique variations within laser system 106 may cause system 102 to generate a unique output signal 120 based on input signal 118. System 102 may generate a different output signal 120 compared to an otherwise identical PUF system (e.g., without the unique variations) for a same input signal 118. Output signal 120 may be unique and non-duplicable for input signal 118.

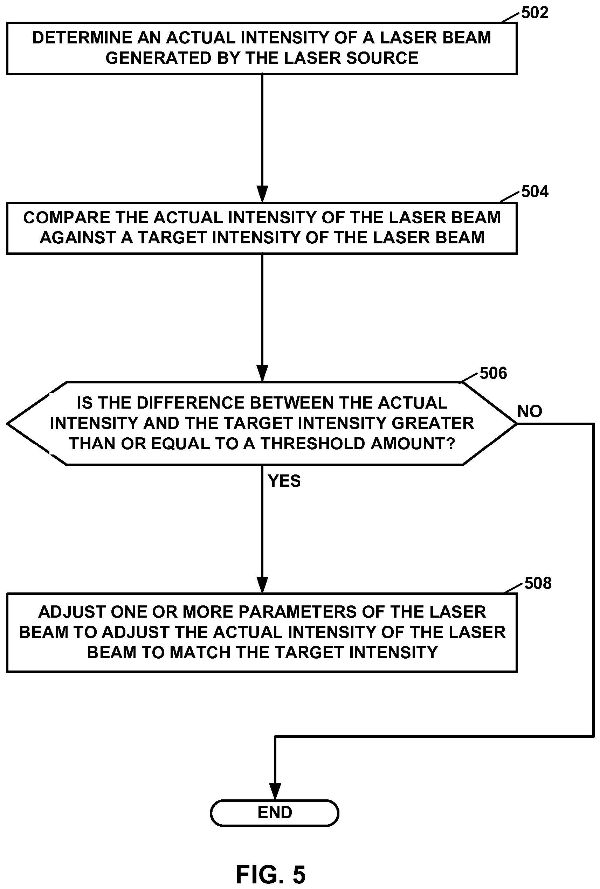

FIG. 5 is a flow chart illustrating an example process of adjusting an intensity of a laser beam 202 of PUF system 102 of FIGS. 1-3. While FIG. 5 is primarily described with reference to system 102 of FIGS. 1-3, the techniques may be performed by any PUF system described herein.

System 102 may determine an actual intensity of laser beam 202 generated by laser source 108 (502). One or more sensors of system 102 (e.g., sensor(s) 114) may sense values indicative to the actual intensity of laser beam 202. Processing circuitry 104 may determine the actual intensity of laser beam 202 based on the sensed values. For example, sensor(s) 114 may determine array 208 of values from FPA 112 and processing circuitry 104 may determine, based on array 208 of values, an actual intensity of laser beam 202. Processing circuitry 104 may apply one or more algorithms (e.g., one or more error detection algorithms) to determine the actual intensity of laser beam 202.

In some examples, photodiode(s) 302 of feedback circuitry 116 may monitor the intensity of laser beam 202. Amplifier(s) 306 of feedback circuitry 116 may amplify signal 304 from photodiode(s) 302 and transmit amplified signal 308 to control circuitry 310 of feedback circuitry 116. Control circuitry 310 may determine the actual intensity of laser beam 202 based on amplified signal 308.

System 102 may compare the actual intensity of laser beam 202 against a target intensity of laser beam 202 (504). Processing circuitry 104 and/or control circuitry 310 may determine the target intensity of laser beam 202 based on input signal 118. Processing circuitry 104 and/or control circuitry 310 may compare the actual intensity of laser beam 202 against the target intensity of laser beam 202. Components of laser system 106 may degrade over time, which may lead to a deviation between the target intensity of laser beam 202 and the actual intensity of laser beam 202.

Processing circuitry 104 and/or control circuitry 310 may compare the actual intensity of laser beam 202 against the target intensity of laser beam 202 to determine whether the difference between the actual intensity and the target intensity is greater than or equal to a threshold amount (506). The threshold amount may be a threshold percentage of the target intensity (e.g., within up to 10% of the target intensity). The threshold amount may be a threshold range of optical intensity (e.g., in watts per square centimeter (W/cm²)). For example, the threshold range may be about 0.1 to about 0.7 W/cm².

Based on a determination that the difference between the actual intensity and the target intensity is less than the threshold amount ("NO" branch of 506), processing circuitry 104 and/or control circuitry 310 may not make any other adjustments to laser beam 202 ("END"). Based on a determination that the difference between the actual intensity and the target intensity is greater than or equal to the threshold amount ("YES" branch of 506), processing circuitry 104 and/or control circuitry 310 may adjust one or more parameters of laser beam 202 to adjust the actual intensity of laser beam 202 to match the target intensity (508). For example, if the actual intensity is less than the target intensity, processing circuitry 104 and/or control circuitry 310 may increase the intensity value of laser beam 202 (e.g., above the target intensity) to cause the actual intensity of laser beam 202 to match the target intensity. In another example, if the actual intensity is above the target intensity, processing circuitry 104 and/or control circuitry 310 may decrease the intensive value of laser beam 202 (e.g., below the target intensity) to cause the actual intensity of laser beam 202 to match the target intensity.

While FIG. 5 illustrates an example process of adjusting an intensity of laser beam 202 to account for degradation of components of system 102 due to aging, system 102 may make one or more other adjustments to compensate for the effects of the degradation of system 102 on output signal 120. In some examples, processing circuitry 104 and/or control circuitry 310 may adjust one or more parameters of laser beam 202 (e.g., intensity, frequency, duration) to compensate for changes in charge generated by wells 206 of FPA 112 due to degradation of system 102. In some examples, processing circuitry 104 may adjust parameter(s) of the one or more algorithms (e.g., the one or more error correction algorithms) to compensate for the effects of aging on system 102. Processing circuitry 104 may perform the techniques described herein to compensate for the effects of degradation of system 102, e.g., in a closed-loop process.

The techniques of this disclosure may also be described in the following examples.

Example 1: a physical unclonable function (PUF) system comprising: a laser source configured to output a laser beam in response to an input value; a lens configured to diffuse the laser beam into a diffused laser beam; and a focal plane array (FPA) configured to receive the diffused laser beam, the focal plane array comprising an array of wells, each well of the array of wells being configured to receive charge from the diffused laser beam, wherein the PUF system defines one or more unique variations in at least one of: the laser beam; the lens; or the FPA, and wherein the PUF system is configured to generate a unique output value in response to the input value.

Example 2: the PUF system of example 1, further comprising processing circuitry coupled to the laser source and the FPA, wherein to generate the unique output value, the processing circuitry of the PUF system is configured to: receive the input value; determine, based on the input value, one or more parameters for the laser beam; cause the laser source to output the laser beam based on the one or more parameters; receive an array of charge measurement values from the FPA in response to the array of wells of the FPA receiving the charge from the diffused laser beam; and generate, based on the array of charge measurement values, the unique output value corresponding to the input value.

Example 3: the PUF system of example 2, wherein to generate the unique output value based on the array of charge measurement values, the processing circuitry is configured to apply one or more algorithms to the array of values.

Example 4: the PUF system of example 3, wherein the one or more algorithms comprises an error correction algorithm.

Example 5: the PUF system of any of examples 1-4, wherein the PUF system is disposed within a portable computing device.

Example 6: the PUF system of any of examples 1-5, further comprising automatic gain control (AGC) circuitry, wherein the AGC circuitry is configured to maintain an intensity of the laser beam over an operational lifetime of the PUF system.

Example 7: the PUF system of example 6, wherein the AGC circuitry comprises: a photodiode configured to monitor the intensity of the laser beam; an amplifier configured to amplify a signal from the photodiode, the signal indicating the intensity of the laser beam; and control circuitry configured to adjust an output power of the laser source based on a comparison of the monitored intensity to a target intensity.

Example 8: a method comprising: outputting, by a laser source of a physical unclonable function (PUF) system, a laser beam based on an input value; diffusing the laser beam via a lens of the PUF system into a diffused laser beam; receiving, by an array of wells of a focal plane array (FPA) of the PUF system, the diffused laser beam; and generating, based on charge received by the array of wells of the FPA, a unique output value corresponding to the input value, wherein the PUF system defines one or more unique variations in at least one of: the laser beam; the lens; or the FPA.

Example 9: the method of example 8, wherein outputting the laser beam based on the input value comprises: receiving, by processing circuitry of the PUF system, the input value; determining, by the processing circuitry, one or more parameters of the laser beam based on the input value; and causing, by the processing circuitry, the laser source to output the laser beam based on the one or more parameters.

Example 10: the method of any of examples 8 and 9, wherein generating the unique output value corresponding to the input value comprises: obtaining, by processing circuitry of the PUF system, an array of charge measurement values from the array of wells of the FPA, wherein the array of charge measurement values corresponds to charge received by the array of wells from the diffused laser beam; and applying, by the processing circuitry, one or more algorithms to the array of charge measurement values to generate the unique output value.

Example 11: the method of example 10, wherein the one or more algorithms comprises an error correction algorithm.

Example 12: the method of any of examples 8-11, further comprising: maintaining, by automatic gain control (AGC) circuitry of the PUF system, an intensity of the laser beam over an operational lifetime of the PUF system.

Example 13: the method of example 12, wherein maintaining the intensity of the laser beam over the operational lifetime of the PUF system comprises: amplifying, by an amplifier of the AGC circuitry, a signal from a photodiode of the AGC circuitry, the signal indicating the intensity of the laser beam; determining, by control circuitry of the AGC circuitry, a monitored intensity of the laser beam based on the amplified signal; comparing, by the control circuitry, the monitored intensity against a target intensity; and based on a determination that the monitored intensity is different from the target intensity, causing, by the control circuitry, the laser source to adjust the intensity of the laser beam.

Example 14: a computing device comprising a physical unclonable function (PUF) system comprising: a laser source configured to output a laser beam in response to an input value; a lens configured to diffuse the laser beam into a diffused laser beam; and a focal plane array (FPA) configured to receive the diffused laser beam, the focal plane array comprising an array of wells, each well of the array of wells being configured to receive charge from the diffused laser beam, wherein the PUF system defines one or more unique variations in at least one of: the laser beam; the lens; or the FPA, and wherein the PUF system is configured to generate a unique output value in response to the input value.

Example 15: the computing device of example 14, wherein the PUF system further comprises processing circuitry coupled to the laser source and the FPA, wherein to generate the unique output value, the processing circuitry of the PUF system is configured to: receive the input value; determine, based on the input value, one or more parameters for the laser beam; cause the laser source to output the laser beam based on the one or more parameters; receive an array of charge measurement values from the FPA in response to the array of wells of the FPA receiving the charge from the diffused laser beam; and generate, based on the array of charge measurement values, the unique output value corresponding to the input value.

Example 16: the computing device of example 15, wherein to generate the unique output value based on the array of charge measurement values, the processing circuitry is configured to apply one or more algorithms to the array of charge measurement values.

Example 17: the computing device of example 16, wherein the one or more algorithms comprises an error correction algorithm.

Example 18: the computing device of any of examples 14-17, wherein the PUF system further comprises automatic gain control (AGC) circuitry configured to maintain an intensity of the laser beam over an operational lifetime of the PUF system.

Example 19: the computing device of example 18, wherein the AGC circuitry comprises: a photodiode configured to monitor the intensity of the laser beam; an amplifier configured to amplify a signal from the photodiode, the signal indicating the intensity of the laser beam; and control circuitry configured to adjust an output power of the laser source based on a comparison of the monitored intensity to a target intensity.

Example 20: the computing device of any of examples 14-19, wherein the computing device comprises a portable computing device.

In one or more examples, the functions described above may be implemented in hardware, software, firmware, or any combination thereof. For example, the various components of FIG. 1, such as processing circuitry 104, feedback circuitry 116, and sensor(s) 114, may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

The term "non-transitory" may indicate that the storage medium is not embodied in a carrier wave or a propagated signal. In certain examples, a non-transitory storage medium may store data that can, over time, change (e.g., in RAM or cache). By way of example, and not limitation, such computer-readable storage media, may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer readable media. In some examples, an article of manufacture may include one or more computer-readable storage media.

Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Combinations of the above should also be included within the scope of computer-readable media.

Instructions may be executed by one or more processors, such as one or more DSPs, general purpose microprocessors, ASICs, FPGAs, or other equivalent integrated or discrete logic circuitry. Accordingly, the term "processor" and "processing circuitry," as used herein, may refer to any of the foregoing structure or any other structure suitable for implementation of the techniques described herein. Also, the techniques could be fully implemented in one or more circuits or logic elements.

The techniques of this disclosure may be implemented in a wide variety of devices or apparatuses, including, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Various examples of the disclosure have been described. These and other examples are within the scope of the following claims.

## Claims

1. A physical unclonable function (PUF) system comprising:
a laser source configured to output a laser beam in response to an input value;
a lens configured to diffuse the laser beam into a diffused laser beam; and
a focal plane array (FPA) configured to receive the diffused laser beam, the focal plane array comprising an array of wells, each well of the array of wells being configured to receive charge from the diffused laser beam,
wherein the PUF system defines one or more unique variations in at least one of:
the laser beam;
the lens; or
the FPA, and
wherein the PUF system is configured to generate a unique output value in response to the input value.

2. The PUF system of claim 1, further comprising processing circuitry coupled to the laser source and the FPA, wherein to generate the unique output value, the processing circuitry of the PUF system is configured to:
receive the input value;
determine, based on the input value, one or more parameters for the laser beam;
cause the laser source to output the laser beam based on the one or more parameters;
receive an array of charge measurement values from the FPA in response to the array of wells of the FPA receiving the charge from the diffused laser beam; and
generate, based on the array of charge measurement values, the unique output value corresponding to the input value.

3. The PUF system of claim 2, wherein to generate the unique output value based on the array of charge measurement values, the processing circuitry is configured to apply one or more algorithms to the array of values.

4. The PUF system of claim 3, wherein the one or more algorithms comprises an error correction algorithm.

5. The PUF system of any of claims 1-4, wherein the PUF system is disposed within a portable computing device.

6. The PUF system of any of claims 1-5, further comprising automatic gain control (AGC) circuitry, wherein the AGC circuitry is configured to maintain an intensity of the laser beam over an operational lifetime of the PUF system.

7. The PUF system of claim 6, wherein the AGC circuitry comprises:
a photodiode configured to monitor the intensity of the laser beam;
an amplifier configured to amplify a signal from the photodiode, the signal indicating the intensity of the laser beam; and
control circuitry configured to adjust an output power of the laser source based on a comparison of the monitored intensity to a target intensity.

8. A method comprising:
outputting, by a laser source of a physical unclonable function (PUF) system, a laser beam based on an input value;
diffusing the laser beam via a lens of the PUF system into a diffused laser beam;
receiving, by an array of wells of a focal plane array (FPA) of the PUF system, the diffused laser beam; and
generating, based on charge received by the array of wells of the FPA, a unique output value corresponding to the input value, wherein the PUF system defines one or more unique variations in at least one of:
the laser beam;
the lens; or
the FPA.

9. The method of claim 8, wherein outputting the laser beam based on the input value comprises:
receiving, by processing circuitry of the PUF system, the input value;
determining, by the processing circuitry, one or more parameters of the laser beam based on the input value; and
causing, by the processing circuitry, the laser source to output the laser beam based on the one or more parameters.

10. The method of any of claims 8 and 9, wherein generating the unique output value corresponding to the input value comprises:
obtaining, by processing circuitry of the PUF system, an array of charge measurement values from the array of wells of the FPA, wherein the array of charge measurement values corresponds to charge received by the array of wells from the diffused laser beam; and
applying, by the processing circuitry, one or more algorithms to the array of charge measurement values to generate the unique output value.

11. The method of claim 10, wherein the one or more algorithms comprises an error correction algorithm.

12. The method of any of claims 8-11, further comprising:
maintaining, by automatic gain control (AGC) circuitry of the PUF system, an intensity of the laser beam over an operational lifetime of the PUF system.

13. The method of claim 12, wherein maintaining the intensity of the laser beam over the operational lifetime of the PUF system comprises:
amplifying, by an amplifier of the AGC circuitry, a signal from a photodiode of the AGC circuitry, the signal indicating the intensity of the laser beam;
determining, by control circuitry of the AGC circuitry, a monitored intensity of the laser beam based on the amplified signal;
comparing, by the control circuitry, the monitored intensity against a target intensity; and
based on a determination that the monitored intensity is different from the target intensity, causing, by the control circuitry, the laser source to adjust the intensity of the laser beam.

14. A computing device comprising a physical unclonable function (PUF) system comprising:
a laser source configured to output a laser beam in response to an input value;
a lens configured to diffuse the laser beam into a diffused laser beam; and
a focal plane array (FPA) configured to receive the diffused laser beam, the focal plane array comprising an array of wells, each well of the array of wells being configured to receive charge from the diffused laser beam,
wherein the PUF system defines one or more unique variations in at least one of:
the laser beam;
the lens; or
the FPA, and
wherein the PUF system is configured to generate a unique output value in response to the input value.

15. The computing device of claim 14, wherein the PUF system further comprises processing circuitry coupled to the laser source and the FPA, wherein to generate the unique output value, the processing circuitry of the PUF system is configured to:
receive the input value;
determine, based on the input value, one or more parameters for the laser beam;
cause the laser source to output the laser beam based on the one or more parameters;
receive an array of charge measurement values from the FPA in response to the array of wells of the FPA receiving the charge from the diffused laser beam; and
generate, based on the array of charge measurement values, the unique output value corresponding to the input value.
